(19) Europäisches Patentamt
European Patent Office
Office européen des brevets

(11) **EP 2 525 256 A1**

(12) **EUROPEAN PATENT APPLICATION**
published in accordance with Art. 153(4) EPC

(43) Date of publication:
**21.11.2012 Bulletin 2012/47**

(51) Int Cl.:
***G02F 1/1368*** (2006.01)

(21) Application number: **10843104.0**

(22) Date of filing: **02.11.2010**

(86) International application number:
**PCT/JP2010/069499**

(87) International publication number:
**WO 2011/086749 (21.07.2011 Gazette 2011/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2010 JP 2010007254**

(71) Applicant: **Sharp Kabushiki Kaisha
Osaka-shi, Osaka 545-8522 (JP)**

(72) Inventors:
• **KATSUTA, Shohei
Osaka-shi, Osaka 545-8522 (JP)**

• **KAMADA, Tsuyoshi
Osaka-shi, Osaka 545 - 8522 (JP)**
• **IDE, Tetsuya
Osaka-shi, Osaka 545 - 8522 (JP)**
• **OHHASHI, Seiji
Osaka-shi, Osaka 545 - 8522 (JP)**

(74) Representative: **Müller - Hoffmann & Partner
Patentanwälte
Innere Wiener Strasse 17
81667 München (DE)**

(54) **LIQUID CRYSTAL DISPLAY DEVICE**

(57)    A liquid crystal display device (1) of the present invention includes: gate bus lines (2); source bus lines (4); CS bus lines (6); gate electrodes; source electrodes; first transistors (TFT1); second transistors (TFT2); first pixel electrodes; second pixel electrodes; pixel regions (8) each including a first sub pixel (8a) and a second sub pixel (8b); pixel regions (10) each including a first sub pixel (10a) and a second sub pixel (10b); pixel regions (12) each including a first sub pixel (12a and a second sub pixel (12b)); gate electrodes; drain electrodes; third transistors (TFT3); first buffer capacitor electrodes; second buffer capacitor electrodes; and capacitors (Cd). Capacitances of the capacitors (Cd) in the respective pixel regions vary depending on the colors displayed by the respective pixel regions. This makes it possible that occurrence of a color shift of an image viewed from the oblique viewing direction is reduced.

FIG. 1

EP 2 525 256 A1

## Description

Technical Field

The present invention relates to a liquid crystal display device having improved viewing angle characteristic.

Background Art

Liquid crystal display devices have been in widespread use in television receivers, monitor devices of personal computers, or the like. In view of such widespread uses, there is a demand that the liquid crystal display devices have high viewing angle characteristic so that display screens can be viewed from any direction. A display screen with a decreased viewing angle characteristic has a problem that, in a case where the display screen is viewed from an oblique direction, a luminance difference within an effective driving voltage range is decreased. This phenomenon is most notably noticeable in color change. For example, in a case where the display screen is viewed from the oblique direction, the display screen is viewed whiter than in a case where it is viewed from a front direction. As countermeasures to such phenomenon, the following arts are available in which wide viewing angle characteristic can be secured.

A patent literature 1 discloses a liquid crystal display device in which voltages whose ratio is unequal are applied to a first sub pixel electrode connected to a thin film transistor and a second sub pixel electrode capacitively coupled to the first sub pixel electrode. The arrangement makes it possible that a color viewed from a side direction is almost identical with a color viewed from a front direction. As such, the liquid crystal display device of the patent literature 1 realizes a high transmittance.

A patent literature 2 discloses a multi-domain vertical alignment liquid crystal display device in which (i) different voltage are applied to a large pixel electrode and a small pixel electrode and (ii) an adjusted voltage is applied to a coupling electrode line, so that red, green, and blue gamma values become uniform.

A patent literature 3 discloses a liquid crystal display device in which an applied voltage difference(s) between sub picture elements in a blue picture element and/or a cyan picture element is smaller than applied voltage differences in other picture elements so that a yellowish color shift of an image viewed at an oblique angle is prevented.

Citation List

Patent Literature

Patent Literature 1

Japanese Patent Application Publication, Tokukai, No. 2006-48055 A (Publication Date: February 16, 2006)
Patent Literature 2
Japanese Patent Application Publication, Tokukai, No. 2009-199067 A (Publication Date: September 3, 2009)
Patent Literature 3
International Patent Application Publication No. WO2005/101817 (Publication Date: October 27, 2005)

Summary of Invention

Technical Problem

However, the arts of the patent literatures 1 through 3 have problems as described below.
According to the art of the patent literature 1, the ratio of voltage applied to the first sub pixel electrode and the voltage applied to the second sub pixel electrode is unequal. This makes it possible that the image viewed from the front direction and the image viewed from the side direction are prevented from giving different color senses to a viewer. However, the patent literature 1 does not disclose that a same effect can be brought about in a 3 TFT driving liquid crystal display device.
According to the art of the patent literature 2, different voltages are applied to the large pixel electrode and the small pixel electrode so that the red, green, and blue gamma values become uniform. However, like the patent literature 1, the patent literature 2 does not disclose that a 3 TFT driving liquid crystal display device brings about an effect of preventing an image viewed from a side direction from giving a color sense different from a color sense given by an image viewed from a front direction.
According to the art of the patent literature 3, an MPD liquid crystal display device is designed so that a color shift of an image viewed at an oblique viewing angle is reduced so that the image gives a same color sense, irrespectively of whether the image is viewed from a front direction or a side direction. However, the patent literature 3 does not disclose that a same effect is brought about in a 3 TFT driving liquid crystal display device.
The present invention is made in view of the problems, and an object of the present invention is to improve a display characteristic, such as a viewing angle characteristic, of a 3 TFT driving type liquid crystal display device without requiring a cost increase.

Solution to Problem

In order to attain the object, a liquid crystal display device of the present invention includes a liquid crystal display device substrate including: a plurality of gate bus lines provided so as to be juxtaposed to each other on a substrate; a plurality of source bus lines provided so as to intersect with the plurality of gate bus lines via an insulating film; a plurality of storage capacitor bus lines provided so as to be juxtaposed to the respective plurality of gate bus lines; and each pixel region, in which a first sub pixel having a first pixel electrode and a second sub pixel having a second pixel electrode are provided and which is specified by one source bus line and a corresponding gate bus line, including a first transistor, having (a) a gate electrode electrically connected to the corresponding gate bus line, (b) a source electrode electrically connected to the source bus line, and (c) a drain electrode electrically connected to the first pixel electrode, a second transistor, having (a') a gate electrode electrically connected to the corresponding gate bus line, (b') a source electrode electrically connected to the source bus line, and (c') a drain electrode electrically connected to the second pixel electrode which is electrically isolated from the first pixel electrode, a third transistor, having (a") a gate electrode electrically connected to another gate bus line provided next to the corresponding gate bus line and (b") a drain electrode electrically connected to the second pixel electrode, and a capacitors, having (a"') a first buffer capacitor electrode electrically connected to a source electrode of the third transistor and (b"') a second buffer capacitor electrode provided so as to face the first buffer capacitor electrode via the insulating film and electrically connected to a corresponding storage capacitor bus line, and the capacitor having a capacitance which varies depending on a display color of the pixel region.

With the arrangement, luminances in sub pixels of the liquid crystal display device at a given gray scale are different from each other. That is, the first sub pixel is used to serve as a bright pixel and the second sub pixel is used to serve as a dark pixel. This makes it possible that a display characteristic obtained at an oblique viewing angle is improved. A luminance difference between the first and second pixels is realized by causing a given difference between a voltage applied across the first sub pixel and a voltage applied across the second sub pixel. Specifically, after an $1^{th}$ one of gate bus lines 2 is selected, a $(1 + 1)^{th}$ one of the gate bus lines 2 is selected so that the third transistor is turned on. This causes redistribution of electric charges so that there is the given difference between the voltage applied across the first sub pixel and the voltage applied across the second sub pixel. That is, the liquid crystal display device is driven by a 3 TFT driving method.

In the liquid crystal display device, capacitances of the capacitors in the respective pixels regions vary depending on the colors displayed by the respective pixels. This makes it possible that a voltage difference between sub pixels of each pixel region varies depending on a color displayed by that pixel, for example. This makes it possible that occurrence of a color shift of an image viewed from the oblique viewing direction is reduced. That is, it is possible that the occurrence of the color shift of the image viewed from the oblique viewing direction is reduced by use of a simple design that the capacitances of the capacitors vary, in other words, without requiring a cost increase.

The present invention thus brings about an effect of improving a display characteristic, such as a viewing angle characteristic, of a 3 TFT driving liquid crystal display device without requiring a cost increase.

For a fuller understanding of the nature and advantages of the invention, reference should be made to the ensuing detailed description taken in conjunction with the accompanying drawings.

Advantageous Effects of Invention

The present invention brings about an effect of realizing an improved display characteristic, such as a viewing angle characteristic, of a 3 TFT driving type liquid crystal display device without causing a cost increase.

Brief Description of Drawings

Fig. 1

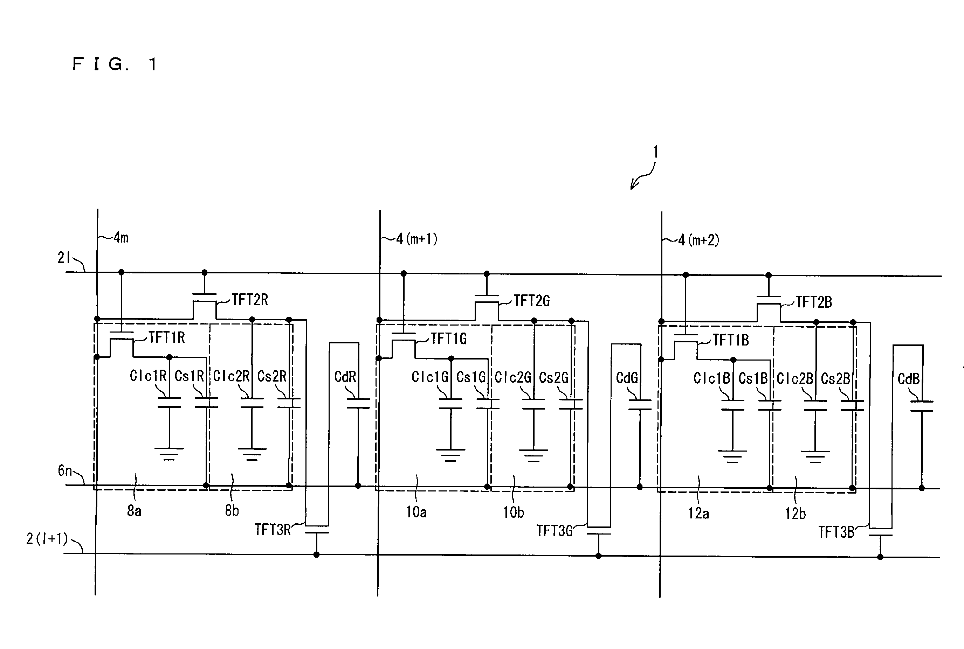

Fig. 1 is a view showing equivalent circuits of pixels having multi-pixel structures in a liquid crystal display device of the present invention.
Fig. 2

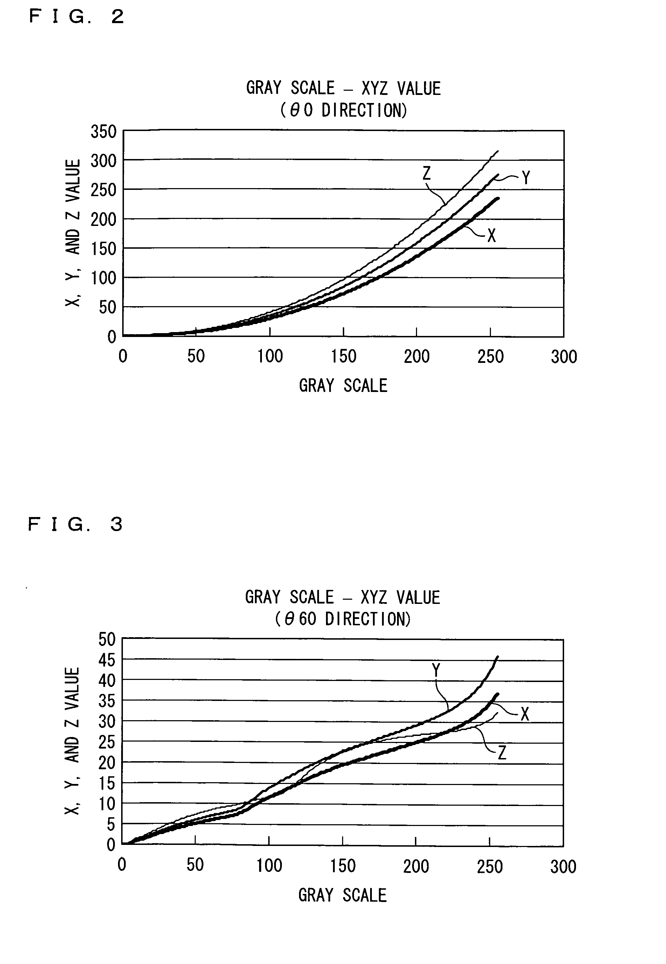

Fig. 2 is a view showing a relationship (characteristic) between a gray scale and three stimulus values (X value, Y value, and Z value) at a front viewing angle.
Fig. 3
Fig. 3 is a view showing a gray scale - XYZ value characteristic at a polar angle of 60 degrees in a liquid crystal display device of a comparative example.
Fig. 4

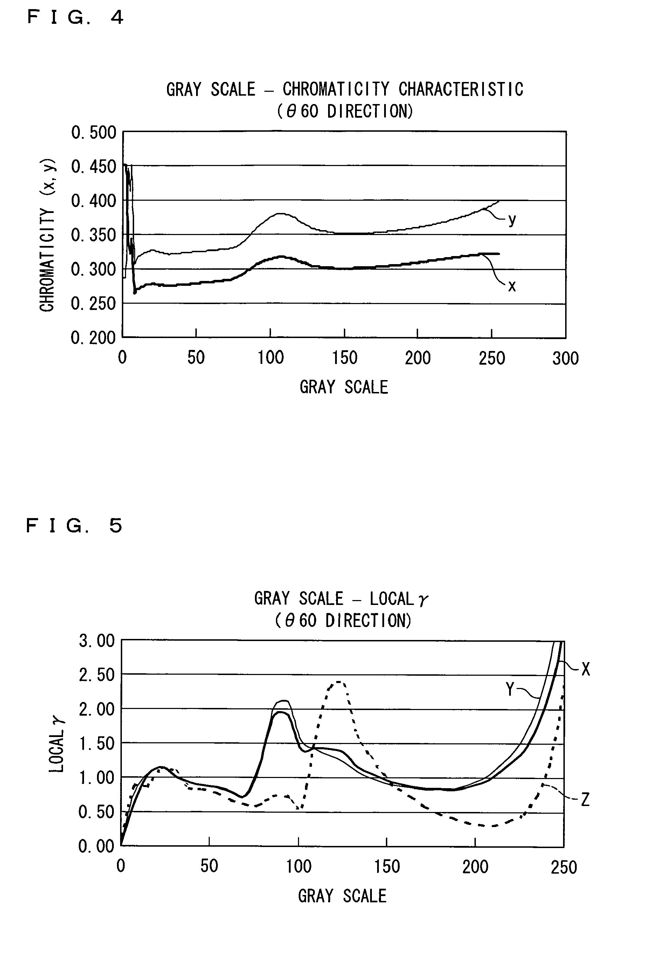

Fig. 4 is a view showing a gray scale - xy value characteristic at a polar angle of 60 degrees in a liquid crystal display device of a comparative example.
Fig. 5
Fig. 5 is a view showing a gray scale - local $\gamma$ characteristic at the polar angle of 60 degrees in the liquid crystal display device of the comparative example.
Fig. 6

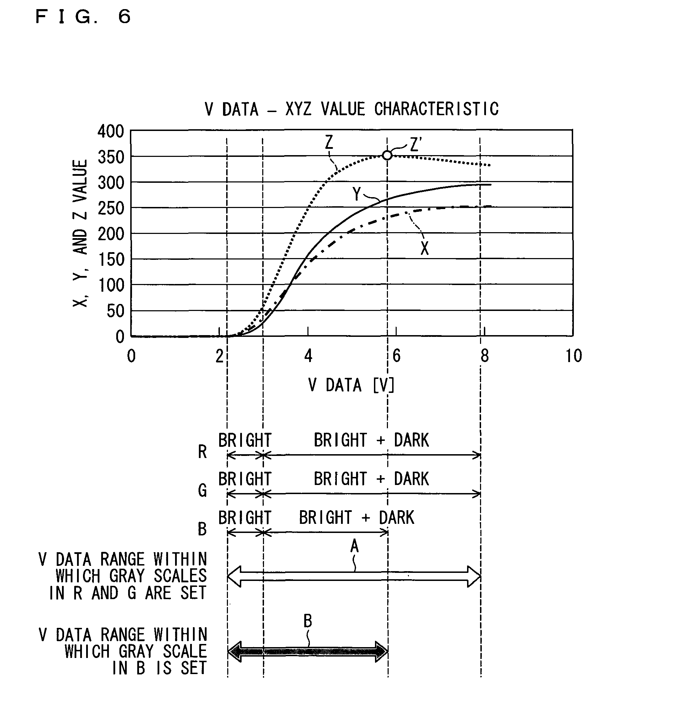

Fig. 6 is a view showing relationships between (i) a voltage applied to a liquid crystal layer in each pixel (horizontal axis) and (ii) an X value, a Y value, and a Z value (longitudinal axis).
Fig. 7

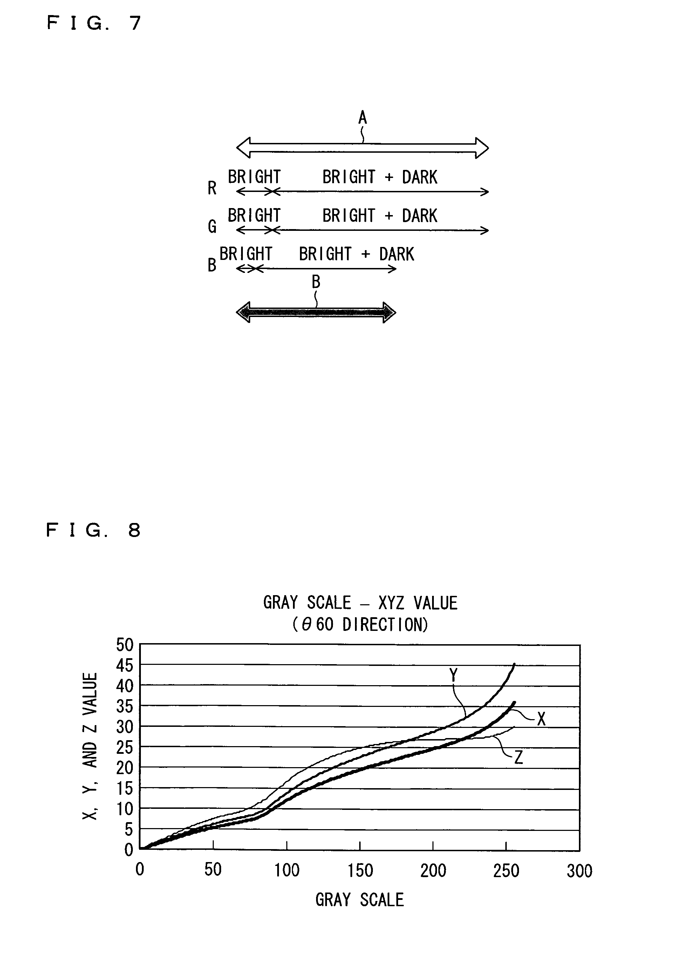

Fig. 7 is a view showing a first partial gray scale region and a second partial gray scale region of an entire gray scale region that corresponds to a gray scale region between lowest and highest gray scales in each elementary color pixel of the liquid crystal display device of the present invention, where the first gray scale region is a gray scale region within which only a bright pixel is shined and the second partial gray scale region is a gray scale region within which both of the bright pixel and a dark pixel are shined.

Fig. 8

Fig. 8 is a view showing a gray scale - XYZ value characteristic at the polar angle of 60 degrees in a liquid crystal display device of the present invention.

Fig. 9

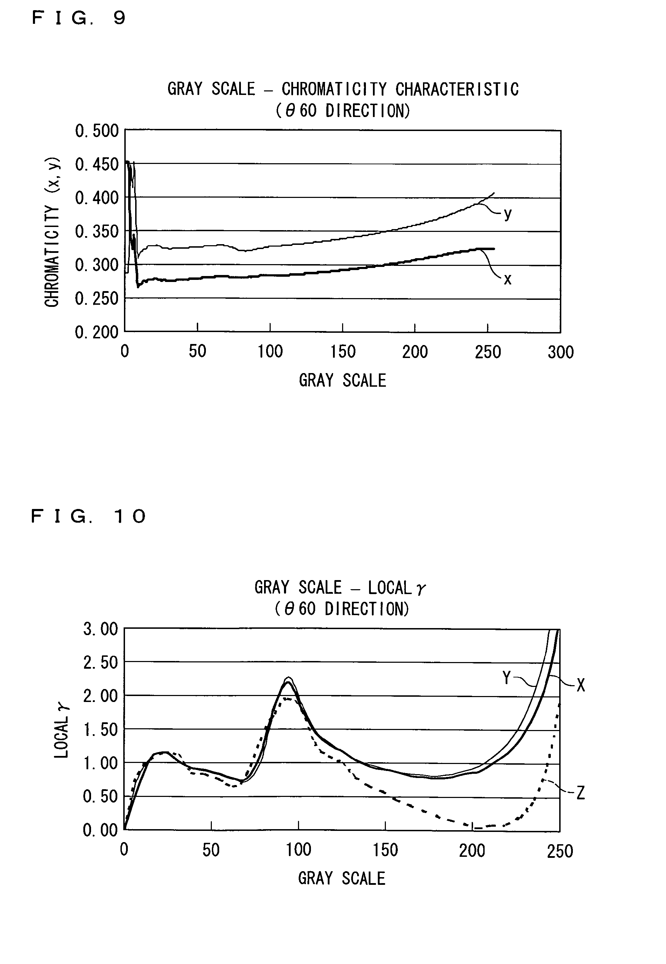

Fig. 9 is a view showing a gray scale - xy value characteristic at the polar angle of 60 degrees in the liquid crystal display device of the present invention.

Fig. 10

Fig. 10 is a view showing a gray scale - local $\gamma$ characteristic at the polar angle of 60 degrees in the liquid crystal display device of the present invention.

Fig. 11

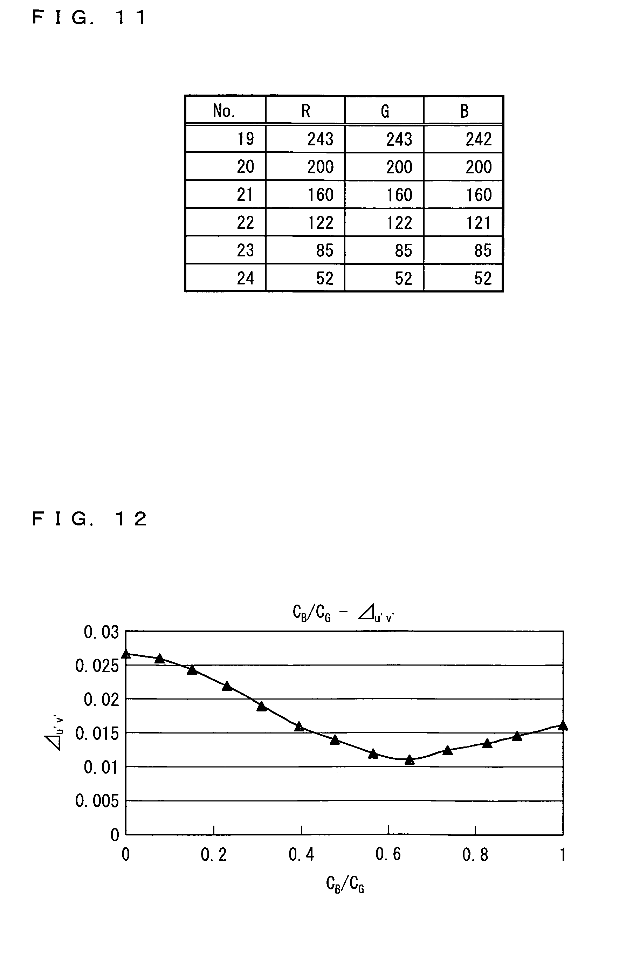

Fig. 11 is a view showing gray scales of six (6) gray scale colors (No. 19 through 24) of the Macbeth chart's 24 colors in each pixel (red (R), green (G), and blue (B)).

Fig. 12

Fig. 12 is a view showing distances between u'v' chromaticity coordinates ($\Delta$u'v') obtained in a case where the six gray scale colors shown in Fig. 11 are displayed and viewed from a front direction and at a polar angle of 60 degrees.

Fig. 13

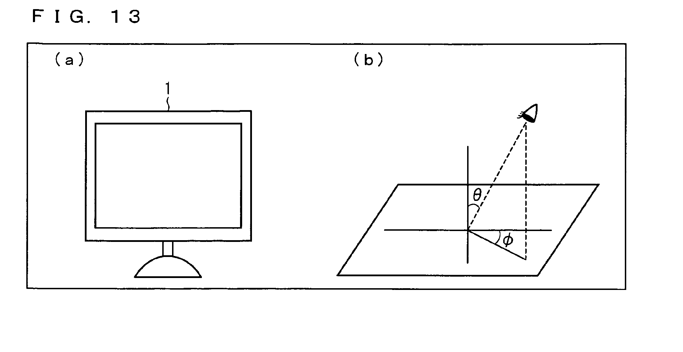

Fig. 13 is a view showing an overview of the liquid crystal display device of the present invention.

Description of Embodiments

An embodiment of the present invention will be described below with reference to Figs. 1 through 13. The following description exemplifies a vertical alignment liquid crystal display device (VA liquid crystal display device) whose liquid crystal material has a negative dielectric anisotropy which brings about a remarkable effect of the present embodiment. However, the present invention is not limited to this. For example, the present embodiment can also be applied to a TN liquid crystal display device.

(Arrangement of Liquid Crystal Display Device 1)

Fig. 1 is a view showing equivalent circuits of pixels having respective multi-pixel structures in a liquid crystal display device 1 of the present embodiment which is driven by a 3 TFT driving method. As shown in Fig. 1, the liquid crystal display device 1 includes a plurality of gate bus lines 2, a plurality of source bus lines 4, a plurality of CS bus lines 6 (storage capacitor lines), a plurality of switching elements TFT1, a plurality of switching elements TFT2, a plurality of switching elements TFT3, a plurality of storage capacitors Cs1, a plurality of storage capacitors Cs2, a plurality of liquid crystal capacitors Clc1, a plurality of liquid crystal capacitors Clc2, and a plurality of capacitors (electric charge redistribution capacitors) Cd. A plurality of pixels are provided in the liquid crystal display device 1, and each of the plurality of pixels is driven by a multi-pixel driving method. Each of the plurality of pixels includes a liquid crystal layer and electrodes via which a voltage is applied across the liquid crystal layer. The plurality of pixels are arranged in a matrix manner consisting of rows and columns.

In Fig. 1, a gate bus line 2l is an $1^{th}$ (where 1 is a positive integer) one of the plurality of gate bus line 2, a source bus line 4m is an $m^{th}$ (where m is a positive integer) one of the plurality of source bus lines 4, and a CS bus line 6n is an $n^{th}$ (where n is a positive integer) one of the plurality of CS bus lines 6.

(Driver)

The liquid crystal display device 1 is connected to a gate driver (not illustrated) for supplying scanning signals to the respective plurality of gate bus lines 2, a source driver (not illustrated) for supplying data signals to the respective plurality of source bus lines 4, and a CS driver (not illustrated) for supplying storage capacitor driving signals to the respective plurality of CS bus lines 6. The gate driver, the source driver, and the CS driver operate in response to control signals supplied from a control circuit (not illustrated).

(Pixel Structure)

The plurality of gate bus lines 2 and the plurality of source bus lines 4 are provided so as to intersect with each other via an insulating film (not illustrated). In the liquid crystal display device 1, each pixel is provided in a region defined by a corresponding one of the plurality of gate bus lines 2 and a corresponding one of the plurality of source bus lines 4. The each pixel displays any of two or more different elementary colors. In Embodiment 1, the two or more different elementary colors include a red color, a green color, and a blue color. In view of the circumstances, an R pixel 8 for displaying the red color, a G pixel 10 for displaying the green color, and a B pixel 12 for displaying the blue color are provided in the liquid crystal display device 1. As such, a desired color image is displayed by use of a combination of the R pixel 8, the G pixel 10, and the B pixel 12.

(Bright Pixel and Dark Pixel)

Each of the R pixel 8, the green pixel 10, and the B pixel 12 is made up of two sub pixels (bright pixel and dark pixel). In the two sub pixels, respective different voltages can be applied across a liquid crystal layer. The R pixel 8 is made up of a bright pixel 8a and a dark pixel 8b, the G pixel 10 is made up of a bright pixel 10a and a dark pixel 10b, and the B pixel 12 is made up of a bright pixel 12a and a dark pixel 12b.

(Liquid Crystal Capacitor and Storage Capacitor)

Each sub pixel has a liquid crystal capacitor Clc formed by (i) a counter electrode, (ii) a sub pixel electrode facing the counter electrode, and (iii) a liquid crystal layer sandwiched between the counter electrode and the sub pixel electrode. The each sub pixel further includes at least one storage capacitor Cs formed by (i) a storage capacitor electrode electrically connected to the sub pixel electrode, (ii) a storage capacitor counter electrode facing the storage capacitor electrode, and (iii) an insulating layer between the storage capacitor electrode and the storage capacitor counter electrode.

That is, the each pixel has a liquid crystal capacitor Clc1 and a liquid crystal capacitor Clc2. The liquid crystal capacitor Clc1 is electrically connected to a first storage capacitor Cs1 in parallel and the liquid crystal capacitor Clc2 is electrically connected to a second storage capacitor Cs2 in parallel.

As shown in Fig. 1, a storage capacitor Cs1R and a liquid crystal capacitor Clc1R are provided in the bright pixel 8a of the R pixel 8, and a storage capacitor Cs2R and a liquid crystal capacitor Clc2R are provided in the dark pixel 8b of the R pixel 8. Similarly, a storage capacitor Cs1G and a liquid crystal capacitor Clc1G are provided in the bright pixel 10a of the G pixel 10, and a storage capacitor Cs2G and a liquid crystal capacitor Clc2G are provided in the dark pixel 10b of the G pixel 10. Similarly, a storage capacitor Cs1B and a liquid crystal capacitor Clc1B are provided in the bright pixel 12a of the B pixel 12, and a storage capacitor Cs2B and a liquid crystal capacitor Clc2B are provided in the dark pixel 12b of the B pixel 12.

Hereinafter, (i) the storage capacitor Cs1R and the storage capacitor Cs2R are collectively referred to as storage capacitors CsR, (ii) the storage capacitor Cs1G and the storage capacitor Cs2G are collectively referred to as storage capacitors CsG, and (iii) the storage capacitor Cs1B and the storage capacitor Cs2B are collectively referred to as storage capacitors CsB.

(Switching Elements TFT1 and TFT2)

In each of the R pixel 8, the G pixel 10, and the B pixel 12, thin film transistors TFT1 and TFT2 are provided. A drain electrode of the TFT1 and a drain electrode of the TFT2 in each of the R pixel 8, the G pixel 10, and the B pixel 12 are connected to a storage capacitor electrode of the storage capacitor Cs1R and a storage capacitor electrode of the storage capacitor Cs2R, respectively. Gate electrodes of the TFT1 and TET2 are commonly connected to a gate bus line 21, and source electrodes of the TFT1 and TFT2 are commonly connected to a source bus line 4. Specifically, as shown in Fig. 1, source electrodes of the TFT1R and TFT2R in the R pixel 8 are connected to a source bus line 4m. Similarly, source electrodes of TFT1G and TFT2G in the G pixel 10 are connected to a source bus line 4(m + 1), and source electrodes of TFT1B and TFT2B in the B pixel 12 are connected to a source bus line 4(m + 2).

(Switching Element TFT 3)

Further, TFT3 is provided in each of the R pixel 8, the G pixel 10, and the B pixel 12. Each TFT3 has a gate electrode electrically connected to a gate bus line associated to a next pixel in a scanning direction, i.e., a gate bus line 2(1 + 1). The each TFT3 has a drain electrode electrically connected to a pixel electrode of a corresponding one of the dark pixels 8b, 10b, and 12b via a corresponding contact hole. In the liquid crystal display device 1 driven by the 3 TFT driving method, when the gate bus line 21 is selected, each liquid crystal capacitor Clc1 in the bright pixels 8a, 10a, and 12a is electrically charged. After a given time period, when the gate bus line 2(1 + 1) is selected, each TFT3 in the R pixel 8, the G pixel 10, and the B pixel 12 is turned on. This gives rise to redistribution of electric charges. This ultimately causes a voltage difference, in each pixel, between (i) the liquid crystal capacitor Clc1 in the bright pixel and (ii) the liquid crystal capacitor Clc2 in the dark pixel. The bright pixels 8a, 10a, and 12a and the dark pixels 8b, 10b, and 12b are thus provided in the R pixel 8, the G pixel 10, and the B pixel 12, respectively.

(CS Bus Line 6)

Each CS bus line 6 extends in a direction in which a corresponding gate bus line 2 extends so as to get across a corresponding pixel region defined by the corresponding gate bus line 2 and a corresponding source line 4. The each CS bus line 6 is provided so as to be shared by R pixels 8, G pixels 10, and B pixels 12 which belong to a same row of pixels arranged in a matrix manner in the liquid crystal display device 1. Specifically, the CS bus line 6n is connected to the storage capacitors Cs1R, Cs2R, Cs1G, Cs2G, Cs1B, and Cs2B. The CS driver applies, via the CS bus line 6n, a voltage of a same magnitude across the storage capacitors Cs provided in respective of the R pixel 8, the G pixel 10, and the B pixel 12.

As later described in detail, a conventional liquid crystal display device causes a problem that, in a case where a display screen is viewed from an oblique direction, a color shift occurs in a displayed image, unlike in a case where the display screen is viewed from a front direction. The following description will discuss why such a problem is caused.

(XYZ Chromaticity Coordinate System)

First, a chromaticity coordinate system, which quantitatively specifies colors, is described. An RGB chromaticity coordinate system, using three elementary colors of red (R), green (G), and blue (B), is a typical chromaticity coordinate system. However, not all perceivable colors can necessarily be specified by the RGB chromaticity coordinate system. For example, a color having a single waveform, such as a color of a laser beam, falls outside the RGB chromaticity coordinate system. If an RGB value can have a negative coefficient, then the RGB chromaticity coordinate system will be able to specify any color. However, this gives rise to inconvenience in handling. In view of the circumstances, an XYZ chromaticity coordinate system is generally employed which is an improved version of the RGB chromaticity coordinate system.

The XYZ chromaticity coordinate system specifies a desired color by use of a combination of tristimulus value (X, Y, and Z values). The X, Y, and Z values, which are new values, are obtained by adding the original R, B, and G values to each other. The combination of the tristimulus values makes it possible that the XYZ chromaticity coordinate system can specify a color of a given spectral, mixed light of spectral colors, and a color of a physical object.

The Y value of the X, Y, and Z values corresponds to a brightness stimulus. That is, the Y value can be used as a typical value of brightness. The X value is a stimulus value primarily representing a red color. However, the X value also contains a given amount of a color stimulus of a blue wavelength range. The Z value is a color stimulus primarily representing a blue color.

(View from Front Direction)

Generally, a liquid crystal display device is adjusted so that chromaticity of a display screen is uniform in case of a front viewing angle (0-degree direction). Fig. 2 is a view showing a relationship (characteristic), between a gray scale and tristimulus value (X, Y, and Z values), obtained in a case where the display screen is viewed from the front direction. As is clear from Fig, 2, a relationship between respective X, Y, and Z values and a gray scale value is indicated by a curve whose γ (gamma) value is about 2.2. As such, no color shift problem is particularly caused in a case where the display screen of the liquid crystal display device is viewed from the front direction.

(View from Oblique Direction)

The VA liquid crystal display device utilizes a liquid crystal birefringence effect. Since retardation of the liquid crystal has wavelength dispersion, transmittance of the liquid crystal layer varies depending on a wavelength of the incident light. Also, retardation of the liquid crystal layer is larger in a case where the display screen is viewed from the oblique direction than in a case where the display screen is viewed from the front direction. As such, the dependence of a fluctuation in the transmittance of the liquid crystal layer with respect to wavelength of the light is increased in a case where the display screen is viewed from the oblique direction, as compared with a case where the display screen is viewed from the front direction. This gives rises to a problem that, when the display screen of the liquid crystal display device is viewed from the oblique direction, the color shift occurs in the displayed image.

With reference to Fig. 13, the following description will discuss an angle at which the display screen of the liquid crystal display device 1 is viewed from the oblique direction. Fig. 13 is a view schematically illustrating the liquid crystal display device 1 in accordance with the present embodiment. (a) of Fig. 13 schematically illustrates the liquid crystal display device 1 and (b) of Fig. 13 illustrates a polar angle θ and an azimuth Φ formed with respect to the display screen of the liquid crystal display device 1. As shown in (b) of Fig. 13, the polar angle θ indicates an angle between (i) a direction, in which a normal line which passes through a center of the display screen, and (ii) a direction in which a visual line extends. The azimuth Φ indicates an angle between (i') a screen horizontal direction (which is identical with a horizontal direction in a normal placement condition) passing through the center of the display screen and (ii') an orthogonal projection of the visual line with respect to the display screen.

(XYZ Value Characteristic)

Fig. 3 is a view showing a gray scale - XYZ value characteristic obtained when the display screen is viewed from the oblique direction, i.e., at a polar angle of 60 degrees, in a liquid crystal display device 1 of a comparative example. The liquid crystal display device 1 of the comparative example meets the following conditions (i) and (ii): (i) Each of (a) an area ratio between the bright pixel 8a and the dark pixel 8b; (b) an area ratio between the bright pixel 10a and the dark pixel 10b; and (c) an area ratio between the bright pixel 12a and the dark pixel 12b is 2 : 3; and (ii) capacitances of capacitors Cd are 0.153 time as large as capacitances of liquid crystal capacitors in respective pixels.

As shown in Fig. 3, a curve of a gray scale - X value characteristic is similar to a curve of a gray scale - Y value characteristic, at the polar angle of 60 degrees. Note, however, that a curve of a gray scale - Z value characteristic shows that the Z value is smaller than the X value and the Y value particularly at an intermediate gray scale near 100. As early described, the Z value is the color stimulus primarily representing the blue color. As such, in a case where a given color is displayed with the use of an intermediate gray scale, a color which is actually displayed at the polar angle of 60 degrees is a blue color fainter than a blue color corresponding to an intended intermediate gray scale. That is, since a blue color component in a display image is decreased, the display image appears to be yellowish. This causes a deterioration in viewing angle characteristic with regard to color.

(Chromaticity Characteristic)

Fig. 4 is a view showing a gray scale - xy value characteristic obtained at the polar angle of 60 degrees in the liquid crystal display device 1 in accordance with the comparative example. Note that an x value and a y value are chromaticity coordinates used in an xyY chromaticity coordinate system newly prepared based on the XYZ chromaticity coordinate system. According to the xyY chromaticity coordinate system, x = X/(X + Y + Z) and y = Y/(X + Y + Z). In each of the x value and the y value, a degree of a change in chromaticity deviates, at an intermediate gray scale which falls within a range from a gray scale of 80 to a gray scale of 130, from an intermediate gray scale which falls within other ranges (see Fig. 4). It follows that it is clear even from Fig. 4 that color shifts are caused.

(Local γ Characteristic)

Fig. 5 is a view showing a gray scale - local γ characteristic obtained at the polar angle of 60 degrees in the liquid crystal display device 1 in accordance with the comparative example. Note that local γ is a value indicating a local inclination of luminance. A value of local γ is calculated by an equation 1 below:

$$local\gamma = \frac{\log(T_a) - \log(T_b)}{\log(a) - \log(b)},$$

where T is a maximum luminance of an optical characteristic measured at a predetermined angle with respect to a direction in which a normal line of the display screen extends, $T_a$ is a luminance corresponding to a gray scale value "a" and measured at the predetermined angle, and $T_b$ is a luminance corresponding to a gray scale value "b" which is different from the gray scale value "a."
A value of γ is increased as a difference between luminances Ta and Tb corresponding to the gray scale values "a" and "b", respectively, is increased. As such, by relatively increasing a value of γ in the oblique direction, it is possible to reduce a change in color on the display screen which change is caused by the fact that a difference between luminances Ta and Tb becomes smaller. It is ideal, in the viewing angle characteristic of the liquid crystal display device 1, that the value of γ in the oblique direction is identical with the value of γ (for example, 2.2) in the front direction over the entire gray scale range (between the gray scale of 0 and the gray scale of 255).
In an example shown in Fig. 5, a local γ peak of the X value and that of the Y value overlap each other. Specifically, the local γ peaks of respective of the X value and the Y value are located near a gray scale of 90. On the other hand, a local γ peak of the Z value deviates from the local γ peaks of the respective of the X values and the Y value. Specifically, the local γ peak of the Z value is located near a gray scale of 125. A displayed image having a gray scale near an intermediate gray scale becomes yellowish, in a case where the display screen is viewed from the oblique direction while the local γ peak of the Z value is thus deviating from the local γ peaks of the respective of the X value and the Y value.

(Cause of Deterioration)

As early described with reference to Figs. 3 through 5, the liquid crystal display device 1 of the comparative example causes the problem that the viewing angle characteristic is deteriorated at the oblique viewing angle, that is, at the polar angle of 60 degrees. A cause of the problem is described below in detail with reference to Fig. 6.
As early described, each of the R pixel 8, the G pixel 10, and the B pixel 12 is made up of a bright pixel and a dark pixel. Normally, in the liquid crystal display device 1, the viewing angle characteristic is improved, at the oblique viewing angle, by causing the redistribution of the electric charges so as to cause the voltage difference between a liquid crystal capacitor Clc1 and a liquid crystal capacitor Clc2 in each pixel. Specifically, the viewing angle characteristic is improved at the oblique viewing angle as early described, by applying voltages across the liquid crystal layers in the respective pixels so that (i) substantially only the bright pixels 8a, 10a, and 12a are turned on at a low gray scale, and (ii) the dark pixels 8b, 10b, and 12b start to be turned on at a given intermediate gray scale.
Fig. 6 is a view showing relationships between (i) a voltage applied across the liquid crystal layer in each pixel (horizontal axis) and (ii) the X value, the Y value, and the Z value (longitudinal axis). As shown in Fig. 6, in a case where an applied voltage is increased to a voltage of larger than about 6 V, there is generally a decrease only in the Z value representing the blue color.
The liquid crystal display device 1 is designed, in advance, so that a voltage is applied across a pixel for each gray scale over a given gray scale range (for example, a gray scale range from a gray scale of 0 to a gray scale of 255). In this case, a voltage range is generally set so that (i) a lower limit is a minimum voltage that is a threshold voltage for determining whether to increases transmittance of the pixel and (ii) an upper limit is a voltage that causes the transmittances of the pixel to increase to a maximum value (saturation value). Note that such a voltage range is set for each of pixel colors (red, green, and blue colors in the present embodiment).
In an example shown in Fig. 6, each of the X value and the Y value is on a curve which gradually increases so that their gamma characteristics become 2.2 within a range from a voltage of about 2 V to a voltage of about 8 V. As such, with regard to the red and green color pixels, the voltage of about 2 V is allocated to the gray scale of 0 and the voltage of about 8 V is allocated to the gray scale of 255. With regard to voltages for respective gray scales other than the gray scales of 0 and 255, voltages are allocated to respective gray scales, within the range from the voltage of about 2 V to the voltage of about 8V, in accordance with sizes of the respective gray scales.

On the other hand, the Z value is on a curve in which the Z value reaches a peak at a voltage of about 6 V. As such, with regard to the blue color pixel, the voltage of about 2 V is allocated to the gray scale of 0 and the voltage of about 6 V is allocated to a gray scale of 255. With regard to voltages for respective gray scales other than the gray scales of 0 and 255, voltages are allocated to respective gray scales, within the range from about the voltage of 2 V to the voltage of about 6 V, in accordance with sizes of the respective corresponding gray scales.

A voltage range (indicated by an arrow A), within which the voltages are set for the gray scales in the red and green color pixels, is therefore different from a voltage range (indicated by an arrow B) within which the voltages are set for the gray scales in the blue color pixel. Note, here, that a voltage range, within which voltages are set only for a bright pixel, is uniform, irrespective of display color of pixel. In other words, voltage ranges within which only the bright pixels 8a, 10a, and 12a are turn on (are luminant) are identical to each other, whereas voltage ranges, within which both of the bright pixels 8a, 10a, and 12a and the dark pixels of 8b, 10b, and 12b, are turned on (are luminant) vary from pixel to pixel. Specifically, only the voltage range within which the dark pixel 12b of the B pixel 12 are turned on is narrowed. This causes the local $\gamma$ peak of the Z value to deviate from the local $\gamma$ peak of the X value and that of the Y value. As such, characteristics as shown in Figs. 3 through 5 are caused. This gives rise to a color shift when the display screen is viewed from an oblique direction.

In order to address the problem of color shift caused when the display screen is viewed from the oblique direction, the liquid crystal display device 1 of the present embodiment is designed as follows. Specifically, the capacitance of the capacitor CdB in the B pixel 12 is set to be smaller than (i) the capacitance of the capacitor CdR in the R pixel 8 and (ii) the capacitance of the capacitor CdG in the G pixel 10. The following description will discuss the reason why the problem can be addressed by designing the liquid crystal display device 1 like above.

(Adjustment of Gray Scale Region)

Fig. 7 is a view showing a first voltage range and a second voltage range in an entire voltage range from a lowest gray scale to a highest gray scale in each elementary color pixel of the liquid crystal display device 1 of the present embodiment. Within the first voltage range, only a bright pixel is luminant. Within the second voltage range, both of a bright pixel and a dark pixel are luminant.

According to the liquid crystal display device 1 of the present embodiment, (i) an entire voltage range within which only the bright pixel 12a of the B pixel 12 is luminant is kept constant and (ii) a voltage range out of the entire voltage range, within which only the bright pixel 12a of the B pixel 12 is luminant, is narrowed as compared with (a) a voltage range within which only the bright pixel 8a of the R pixel 8 is luminant and (b) a voltage range within which only the bright pixel 10a of the G pixel 10 is luminant (see Fig. 7). More specifically, a ratio of the first voltage range and the second voltage range, in the entire voltage range from the lowest gray scale to the highest gray scale, is made identical to each other, irrespective of whether a pixel is the R pixel 8, the G pixel 10, or the B pixel 12. As such, applied voltages for respective gray scales are designed so that the ratios of the first voltage range and the second voltage range, in the entire voltage range from the lowest gray scale to the highest gray scale, is made identical to each other, irrespective of whether a pixel is the R pixel 8, the G pixel 10, or the B pixel 12. This makes it possible that local $\gamma$ peak of the Z value is located at a gray scale identical with a gray scale of the local $\gamma$ peak of the X value and a gray scale of the local $\gamma$ peak of the Y value. This prevents a color shift from occurring even in a case where a display screen is viewed from the oblique direction.

(Adjustment of $\Delta V\alpha$)

According to the liquid crystal display device 1, in order to allocate the voltages to the respective gray scales as shown in Fig. 7, a difference (hereinafter, referred to as "$\Delta V\alpha$") between voltages applied, at a given gray scale, across liquid crystal layers in respective of bright and dark pixels of a pixel is made different from each other depending on a color displayed by the pixel. Specifically, $\Delta V\alpha$ can be made different from each other depending on a color displayed by a pixel, by making a capacitance of a capacitor Cd in the pixel different from each other depending on the color displayed by the pixel. Capacitances of capacitors Cd in respective entire pixels are not necessarily different from each other. For example, only a capacitance of a capacitor Cd in a pixel displaying a given elementary color can be made different from a capacitance of a capacitor Cd in a pixel displaying any color other than the given color.

In the present embodiment, $\Delta V\alpha$ in the B pixel 12 is set to be smaller than $\Delta V\alpha$ in the R pixel 8 and $\Delta V\alpha$ in the G pixel 10. This is achieved by setting a capacitance of a capacitor CdB in the B pixel to be smaller than (i) a capacitance of a capacitor CdR in the R pixel 8 and (ii) a capacitance of a capacitor CdG in the G pixel 10. That is, the capacitances of the respective capacitors CdR, CdG, and CdB are set so that CdB < CdG $\leq$ CdR. This makes it possible that $\Delta V\alpha$ in the B pixel 12 is smaller than $\Delta V\alpha$ in the R pixel 8 and $\Delta V\alpha$ in the G pixel 10. Note that, a structure can be simplified by employing an arrangement in which CdG = CdR.

(Viewing From Oblique Direction)

Fig. 8 is a view showing a gray scale - XYZ value characteristic obtained at the polar angle of 60 degrees in the liquid crystal display device 1 of the present embodiment. In the liquid crystal display device 1, the capacitance of the capacitor CdB in the B pixel 12 is more than 0.4 time as large as the capacitance of the capacitor CdG in the G pixel 10, but is smaller than the capacitance of the capacitor CdG in the G pixel 10. This causes $\Delta V\alpha$ in the B pixel to be smaller than $\Delta V\alpha$ in the R pixel 8 and $\Delta V\alpha$ in the G pixel 10.

(XYZ Value Characteristic)

As shown in Fig. 8, the gray scale - XYZ value characteristics obtained at the polar angle of 60 degrees are in respective curves similar to each other. That is, unlike the example shown in Fig. 3, the gray scale - Z value characteristic is in a curve in which the Z value is not decreased as compared to the X value and the Y value, at an intermediate gray scale near a gray scale of 100 in particular.

(Chromaticity Characteristic)

Fig. 9 is a view showing a gray scale - xy value characteristic obtained at the polar angle of 60 degrees in the liquid crystal display device 1 of the present embodiment. In an example shown in Fig. 9, unlike the example shown in Fig. 4, each of an x value and a y value does not deviate within an intermediate gray scale range from a gray scale of 80 to a gray scale of 130.

(Local γ Characteristic)

Fig. 10 is a view showing a gray scale - local γ characteristic obtained at the polar angle of 60 degrees in the liquid crystal display device 1 of the present embodiment. In an example shown in Fig. 10, local γ characteristic peaks of respective of an X value, a Y value, and a Z value overlap each other.

As is clear from Figs. 8 through 10, the problem, that the color shift occurs when the display screen is viewed from the oblique direction, is not caused in the liquid crystal display device 1 of the present embodiment. That is, the liquid crystal display device 1 of the present embodiment has an improved viewing angle characteristic.

(Suitable Range of Capacitor CdB)

Fig. 11 is a view showing gray scales of six (6) gray scale colors (No. 19 through 24) out of Macbeth chart's 24 colors in the respective pixels (red (R), green (G), and blue (B)). Values shown in Fig. 11 are design values obtained in a case where a C illuminant with 2 degree observes. Fig. 12 is a view showing a distance between u'v' chromaticity coordinates ($\Delta$u'v') obtained in a case where the six gray scale colors shown in Fig. 11 are displayed and viewed from a front direction and from an oblique direction (60-degree direction). A longitudinal axis indicates $\Delta$u'v', and a horizontal axis indicates a ratio of a capacitance $C_B$ of the capacitor CdB in the B pixel 12 to a capacitance $C_G$ of the capacitor CdG in the G pixel 10. That is, in a case where the capacitance $C_G$ is set to a fixed value, the capacitance $C_B$ is increased as CB/CG (the horizontal axis) is increased.

As shown in Fig. 12, $\Delta$u'v' is smaller within a range that $0.4 < (CB/CG) < 1.0$ than within a range in which CB/CG = 1. As such, a color shift can be improved within the range in which $0.4 < (CB/CG) < 1.0$. This demonstrates that a viewing angle characteristic can be improved.

(Another Arrangement)

According to the liquid crystal display device 1, (i) a capacitance $C_R$ of the capacitor CdR in the R pixel 8 can be substantially 0.153 time larger than a capacitance of the liquid crystal capacitor in the R pixel 8 or the capacitance $C_G$ of the capacitor CdG in the G pixel 10 can be substantially 0.153 time larger than a capacitance of the liquid crystal capacitor in the G pixel 10, and (ii) the capacitance $C_B$ of the capacitor CdB in the B pixel 12 can be substantially 0.086 time larger than a capacitance of the liquid crystal capacitor in the B pixel 12. With the capacitance $C_R$ or $C_B$ and the capacitance $C_B$ being set to such respective suitable values, the viewing angle characteristic can be more improved.

It is preferable that $0.58 < \Delta V12B/\Delta V10G < 1.00$ in the liquid crystal display device 1. Note, here, that $\Delta V12B$ indicates a difference between (i) an effective voltage applied across the liquid crystal layer in the bright pixel 12a of the B pixel 12 and (ii) an effective voltage applied across the liquid crystal layer in the dark pixel 12b of the B pixel 12. On the other hand, $\Delta V10G$ indicates a difference between (i) an effective voltage applied across the liquid crystal layer in the bright pixel 10a of the G pixel 10 and (ii) an effective voltage applied across the liquid crystal layer in the dark pixel 10b of the G pixel 10. It is most preferable that $\Delta V12B/\Delta V10G = 0.69$. With $\Delta V12B/\Delta V10G$ being set to such optimum value, the viewing angle characteristic can be more improved.

Further, an art that thicknesses of cell gaps, that is, thicknesses of liquid crystal, in respective of R, G, and B pixels vary can be employed so that the viewing angle characteristic of the liquid crystal display device 1 is improved. That is, the viewing angle can be improved by applying the art, which is known to a public, to the present invention.

(Supplementary Note)

The invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

The present invention can also be described as follows, for example.

1. A liquid crystal display device in which an R Cd capacitance, a G Cd capacitance, and a B Cd capacitance are different from each other in a 3 TFT driving method.

2. The liquid crystal display device in which particularly the B Cd capacitance is smaller than the R Cd capacitance and the G Cd capacitance (the B Cd capacitance is 0.56 time larger than the R Cd capacitance and the G Cd capacitance).

3. The liquid crystal display device in which the R Cd capacitance and the G Cd capacitance are 0.153 time larger than a liquid crystal capacitance (during a Von period) and the B Cd capacitance is 0.086 time larger than the liquid crystal capacitance.

4. The liquid crystal display device in which a voltage difference between B sub pixels during the Von period is 0.69 time larger than a voltage difference between R sub pixels and a voltage difference between G sub pixels (the voltage difference between the B sub pixels is 1.1 V, whereas the voltage difference between the R sub pixels and the voltage difference between the G pixels are 1.6 V).

5. The liquid crystal display device in which an R cell gap, a G cell gap, and a B cell gap can be different from each other (note, however, that a ratio of the R, G, and B Cd capacitances is unequal and a ratio of the voltage differences between the R, G, and B sub pixels is unequal).

Furthermore, it is preferable that the liquid crystal display device of the present invention is arranged so that the pixel regions independently display red, green, or blue colors; and a capacitor in that of the pixel regions which displays the blue color has a capacitance of smaller than a capacitance of a capacitor in another of the pixel regions which displays the red or green color.

With the arrangement, the pixel regions independently display red, green, and blue colors, and the capacitor in that of the pixel regions which displays the blue color has the capacitance of smaller than the capacitance of the capacitor in another of the pixel regions which displays the red or green color. This makes it possible that a voltage difference between sub pixels in the pixel region displaying the blue color is smaller than a voltage difference between sub pixels in the pixel region displaying the red or green color.

This makes it possible that a voltage region A within an entire voltage region from a lowest gray scale to a highest gray scale is smaller than a voltage region B, where the voltage region A is a voltage region within which only a bright pixel of bright and dark pixels (sub pixels) of the pixel region displaying the blue color are turned on and the dark pixel region is not turned on yet, whereas the voltage region B is a voltage region within which only a bright pixel (sub pixel) of the pixel region displaying the red or green color is turned on. This makes it possible that ratios between gray scale regions in each of the pixel regions, where one of the gray scale regions is a gray scale region within which only a bright pixel is turned on and the other of the gray scale regions is a gray scale region within which both of the bright pixel and a dark pixel are turned on, are close to each other over an entire gray scale region, irrespective of the elementary colors of pixels. This makes it possible for a normal liquid crystal display device to reduce occurrence of a color shift viewable in a case where a screen is viewed from an oblique direction.

Furthermore, it is preferable that the liquid crystal display device of the present invention is arranged so that a first difference between (i) a voltage applied to a first sub pixel in that of the pixel regions which displays the blue color and (ii) a voltage applied to a second sub pixel in that pixel region is more than 0.58 time but less than 1.00 time larger than a second difference between (a) a voltage applied to a first sub pixel in the another of the pixel regions which displays the red or green color and (b) a voltage applied to a second sub pixel in the another of the pixel regions.

The arrangement can suitably reduce a color shift viewable at an oblique viewing angle.

Furthermore, it is preferable that the liquid crystal display device of the present invention is arranged so that the capacitance of the capacitor in that of the pixel regions which displays the blue color is more than 0.40 time but less than 1.00 time larger than the capacitance of the capacitor in the another of the pixel regions.

The arrangement can suitably reduce the color shift viewable at the oblique viewing angle.

Furthermore, it is preferable that the liquid crystal display device of the present invention is arranged so that the first difference is substantially 0.69 time larger than the second difference.

The arrangement can most suitably reduce the color shift viewable at the oblique viewing angle.

Further, it is preferable that the liquid crystal display device of the present invention is arranged so that: the capacitance of the capacitor in the another of the pixel region is substantially 0.153 time larger than a capacitance of a liquid crystal capacitor of the first sub pixel in the another of the pixel regions; and the capacitance of the capacitor in that of the pixel regions which displays the blue color is substantially 0.086 time larger than a capacitance of a liquid crystal capacitor of the first sub pixel in the that pixel region.

The arrangement can most suitably reduce the color shift viewable at the oblique viewing angle.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided that such variations do not exceed the scope of the patent claims set forth below.

Industrial Applicability

A liquid crystal display device of the present invention is widely applicable as various VA liquid crystal display devices.

Reference Signs List

| | |
|---|---|
| 1: | liquid crystal display device |
| 2: | gate bus line |
| 4: | source bus line |
| 6: | CS bus line (storage capacitor bus line) |
| 8: | R pixel (pixel region) |
| 8a: | bright pixel of R pixel (first sub pixel) |
| 8b: | dark pixel of R pixel (second sub pixel) |
| 10: | G pixel (pixel region) |
| 10a: | bright pixel of G pixel (first sub pixel) |
| 10b: | dark pixel of G pixel (second sub pixel) |
| 12: | B pixel (pixel region) |
| 12a: | bright pixel of B pixel (first sub pixel) |
| 12b: | dark pixel of B pixel (second sub pixel) |
| TFT1: | switching element (first transistor) |
| TFT2: | switching element (second transistor) |
| TFT3: | switching element (third transistor) |
| Cs: | storage capacitor |
| Clc: | liquid crystal capacitor |
| CdR: | capacitor in R pixel (a capacitor in a pixel region for displaying a red color) |
| CdG: | capacitor in G pixel (a capacitor in a pixel region for displaying a green color) |
| CdB: | capacitor in B pixel (a capacitor in a pixel region for displaying a blue color) |

**Claims**

1. A liquid crystal display device, comprising:

  a plurality of gate bus lines provided so as to be juxtaposed to each other on a substrate;
  a plurality of source bus lines provided so as to intersect with the plurality of gate bus lines, via an insulating film;
  a plurality of storage capacitor bus lines provided so as to be juxtaposed to the respective plurality of gate bus lines; and
each pixel region, in which a first sub pixel having a first pixel electrode and a second sub pixel having a second pixel electrode are provided and which is specified by one source bus line and a corresponding gate bus line, including:

  a first transistor, having (a) a gate electrode electrically connected to the corresponding gate bus line, (b) a source electrode electrically connected to the source bus line, and (c) a drain electrode electrically connected to the first pixel electrode,
  a second transistor, having (a') a gate electrode electrically connected to the corresponding gate bus line, (b') a source electrode electrically connected to the source bus line, and (c') a drain electrode electrically connected to the second pixel electrode which is electrically isolated from the first pixel electrode;
  a third transistor, having (a") a gate electrode electrically connected to another gate bus line provided next to the corresponding gate bus line and (b") a drain electrode electrically connected to the second pixel electrode; and
  a capacitors, having (a"') a first buffer capacitor electrode electrically connected to a source electrode of the third transistor and (b"') a second buffer capacitor electrode provided so as to face the first buffer capacitor electrode via the insulating film and electrically connected to a corresponding storage capacitor bus line, and,
  the capacitor having a capacitance which varies depending on a display color of the pixel region.

2. The liquid crystal display device as set forth in Claim 1, wherein:

  the pixel regions independently display red, green, or blue colors; and
  a capacitor in that of the pixel regions which displays the blue color has a capacitance of smaller than a capacitance of a capacitor in another of the pixel regions which displays the red or green color.

3. The liquid crystal display device as set forth in Claim 2, wherein
a first difference between (i) a voltage applied to a first sub pixel in that of the pixel regions which displays the blue color and (ii) a voltage applied to a second sub pixel in that pixel region is more than 0.58 time but less than 1.00 time larger than a second difference between (a) a voltage applied to a first sub pixel in the another of the pixel regions which displays the red or green color and (b) a voltage applied to a second sub pixel in the another of the pixel regions.

4. The liquid crystal display device as set forth in Claim 2 or 3, wherein
the capacitance of the capacitor in that of the pixel regions which displays the blue color is more than 0.40 time but less than 1.00 time larger than the capacitance of the capacitor in the another of the pixel regions.

5. The liquid crystal display device as set forth in Claim 3, wherein
the first difference is substantially 0.69 time larger than the second difference.

6. The liquid crystal display device as set forth in Claim 2 or 4, wherein:

the capacitance of the capacitor in the another of the pixel region is substantially 0.153 time larger than a capacitance of a liquid crystal capacitor of the first sub pixel in the another of the pixel regions; and
the capacitance of the capacitor in that of the pixel regions which displays the blue color is substantially 0.086 time larger than a capacitance of a liquid crystal capacitor of the first sub pixel in the that pixel region.

F I G. 1

EP 2 525 256 A1

F I G. 2

GRAY SCALE - XYZ VALUE
(θ 0 DIRECTION)

F I G. 3

GRAY SCALE - XYZ VALUE
(θ 60 DIRECTION)

FIG. 4

GRAY SCALE - CHROMATICITY CHARACTERISTIC
(θ 60 DIRECTION)

FIG. 5

GRAY SCALE - LOCAL γ
(θ 60 DIRECTION)

F I G. 6

V DATA – XYZ VALUE CHARACTERISTIC

F I G. 7

A

BRIGHT    BRIGHT + DARK
R

BRIGHT    BRIGHT + DARK
G

BRIGHT    BRIGHT + DARK
B

B

F I G. 8

GRAY SCALE − XYZ VALUE
(θ 60 DIRECTION)

X, Y, AND Z VALUE

Y

X

Z

GRAY SCALE

FIG. 9

GRAY SCALE — CHROMATICITY CHARACTERISTIC
(θ 60 DIRECTION)

FIG. 10

GRAY SCALE — LOCAL γ
(θ 60 DIRECTION)

F I G.  1 1

| No. | R | G | B |
|---|---|---|---|
| 19 | 243 | 243 | 242 |
| 20 | 200 | 200 | 200 |
| 21 | 160 | 160 | 160 |
| 22 | 122 | 122 | 121 |
| 23 | 85 | 85 | 85 |
| 24 | 52 | 52 | 52 |

F I G.  1 2

$C_B/C_G - \Delta_{u'v'}$

F I G. 1 3

<div align="center">

**INTERNATIONAL SEARCH REPORT**

</div>

| | International application No. |
|---|---|
| | PCT/JP2010/069499 |

| A. CLASSIFICATION OF SUBJECT MATTER |
|---|
| *G02F1/1368*(2006.01)i |
| |
| According to International Patent Classification (IPC) or to both national classification and IPC |

| B. FIELDS SEARCHED |
|---|
| Minimum documentation searched (classification system followed by classification symbols) |
| G02F1/1368 |
| |
| Documentation searched other than minimum documentation to the extent that such documents are included in the fields searched<br>   Jitsuyo Shinan Koho       1922-1996   Jitsuyo Shinan Toroku Koho   1996-2010<br>   Kokai Jitsuyo Shinan Koho   1971-2010   Toroku Jitsuyo Shinan Koho   1994-2010 |
| Electronic data base consulted during the international search (name of data base and, where practicable, search terms used) |
| |

| C. DOCUMENTS CONSIDERED TO BE RELEVANT | | |
|---|---|---|
| Category* | Citation of document, with indication, where appropriate, of the relevant passages | Relevant to claim No. |
| A | JP 2006-133577 A (Sharp Corp.),<br>25 May 2006 (25.05.2006),<br>entire text; all drawings<br>& US 2006/0215066 A1   & KR 10-2006-0052509 A<br>& CN 1773355 A | 1-6 |
| A | JP 2009-181126 A (Samsung Electronics Co.,<br>Ltd.),<br>13 August 2009 (13.08.2009),<br>entire text; all drawings<br>& US 2009/0195719 A1   & KR 10-2009-0084166 A<br>& CN 101498874 A | 1-6 |
| A | JP 2009-53589 A (Sony Corp.),<br>12 March 2009 (12.03.2009),<br>entire text; all drawings<br>(Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
|   26 November, 2010 (26.11.10) |   07 December, 2010 (07.12.10) |
| Name and mailing address of the ISA/<br>  Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2010/069499 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2009-139629 A (Sony Corp.), 25 June 2009 (25.06.2009), entire text; all drawings & US 2009/0146936 A1 & CN 101452171 A & KR 10-2009-0060197 A | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006048055 A
- JP 2009199067 A
- WO 2005101817 A